(19)

(11) **EP 2 202 915 B1**

(12) # EUROPEAN PATENT SPECIFICATION

(45) Date of publication and mention of the grant of the patent:
**16.08.2017 Bulletin 2017/33**

(21) Application number: **08425820.1**

(22) Date of filing: **29.12.2008**

(51) Int Cl.:
***H04L 12/18*** *(2006.01)*

(54) **COMMUNICATION SYSTEM FOR BROADCASTING AUDIO MESSAGES IN MULTICAST MODE**

KOMMUNIKATIONSSYSTEM FÜR RUNDFUNKAUDIONACHRICHTEN IM MULTICASTMODUS

SYSTÈME DE COMMUNICATION POUR DIFFUSER DES MESSAGES AUDIO EN MODE MULTIDIFFUSION

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**30.06.2010 Bulletin 2010/26**

(73) Proprietor: **ALSTOM Transport Technologies**
**93400 Saint-Ouen (FR)**

(72) Inventors:
- **Cimmino, Silvia**
  **I-37139 Verona (IT)**
- **Totaro, Stefano**
  **I-37139 Verona (IT)**

(74) Representative: **Karaghiosoff, Giorgio Alessandro**
**Studio Karaghiosoff e Frizzi S.r.l.**
**Via F. Baracca 1R 4° piano**
**17100 Savona (IT)**

(56) References cited:
**EP-A- 1 903 715**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 202 915 B1

Printed by Jouve, 75001 PARIS (FR)

## Description

The invention relates to a communication system for broadcasting audio messages in multicast mode according to the preamble of claim 1.

A system of this kind is known from EP 1 903 715.

In document EP 1 903 715 a system and method for processing multicast in a unicast-based Voice over Internet Protocol (VoIP) system is disclose. The method includes the steps of: receiving, at a VoIP call server, subnet information from VoIP terminals authenticated by an authentication server, generating multicast group information, and then providing the multicast group information to the respective authenticated VoIP terminals; searching, at the VoIP call server, a list of grouped VoIP terminals, selecting a VoIP terminal of a corresponding subnet, and then transmitting multicast session information to the selected VoIP terminal so as to set the VoIP terminal as a relay VoIP terminal; and requesting, at the VoIP call server, a media server to transmit group message data to the relay VoIP terminal. According to the system and method, it is possible to implement multicast in a unicast-based VoIP system without the need for additional equipment.

Multicast audio communication systems are known in the art. Here, the term multicast is intended in its meaning as a standard and more generally to mean simultaneous broadcasting of information to a group of recipients. Prior art multicast systems for message delivery include a client console which initializes the communication session and addresses a group of receiver units, each broadcasting, for example, an audio message through one or more speakers. The receiver units act as hosts and communication therewith traditionally occurs via a single one-way channel. Therefore, multicast systems require a very narrow bandwith.

Traditional multi-conference systems use exchanges, known as PBX, with hosts, such as telephone or communication units, connected thereto via a dedicated two-way channel. The exchange includes a media mixer which mixes contributions from the individual channels and sends the mixed signal to the recipient hosts.

VoIP (Voice over IP) systems are systems in which the individual hosts or clients, i.e. the communication units, are networked together in a peer-to-peer network arrangement. A PBX is also provided in this case. Only two communication units at a time are involved in each communication and communication occurs in both ways. VoIP technology, as well as typical communication protocols such as SIP and H323 are known in the art. Furthermore, the PBX may consist of a dedicated hardware or of a generic hardware such as a computer or a PC which executes a software for the specific functions of an exchange.

Therefore, VoIP communication systems do not provide multicast transmission but only multi-conference transmission. This requires a large bandwith and does not guarantee the complete sinchronisation of the different audio channels.

Particularly when the system is of the so-called public address type and audio communication is broadcast through a large number of speakers arranged over a large surface or a relatively long path, at a distance from each other, the audio signal, i.e. the message that reaches the listener, is given by the sum of audio contributions from more than one speaker, the combination of such contributions possibly disturbing message reception by the listener. This drawback typically occurs in the above systems, which do not allow synchronized broadcast of the message through the speakers within tolerances of a few milliseconds.

Furthermore, use of VoIP communication would be also desirable for multicast message transmission, because it would allow an Ethernet network to be used for connection of the receiver units, the exchange and any transmit/receive client units for initializing the multicast transmission session, which would facilitate configuration of connections, as well as configuration of the receiver units, the transmit/receive client units and/or the exchange, due to the possibility of carrying out such procedures by remote and software means.

Therefore, the invention relates to a communication system for broadcasting audio messages in multicast mode according to the preamble of claim 1, further comprising the features of the characterizing part of claim 1.

Concerning protocol definitions and communication or network types, these are described in detail in publications available through the RFC-Editor Web Pages, which allows consultation of the RFC Document database, containing the documents published by "The Internet Society" ISOC and by IETF (Internet Engineering Task Force), from the Web site www.ietf.org.

Concerning the connection exchange, it consists of a hardware/software unit, in which the hardware unit is a traditional computer having network interfaces connected to the remaining devices such as the transmit/receive client units, the receiver units and/or other units by means of network switches or hubs. The PBX part is a software unit, and the multicast communication server unit is also in software form, and may be executed either by the same computer that executes the PBX software or by a separate computer.

The two sections or modules that form the multicast communication server unit are also in software form. Particularly, the receive/transmit terminal may consist of a standard softphone using the SIP protocol.

The multicast streamer may use several different protocols, possibly non-standard protocols, as needed.

By the SIP softphone, the multicast communication server unit communicates with the transmit/receive client unit through the PBX and receives the audio message to be broadcast or a text message to be turned into an audio message, or consisting of the ID code of an audio message pre-recorded or stored in a memory of the multicast communication server unit.

Through the transmit/receive client unit, the multicast communication server unit may also receive the list of addresses or IDs of the receiver units belonging to the group of prospective recipients of the multicast message.

The multicast streamer generates a broadcast message, which announces the start of a multicast message transmission, and contains a list of all the addresses or IDs of the receiver units of the group of recipients as defined above and subsequently transmits the vocal message to such group of recipients.

The receiver units may be of various types and are preferably of the automatic response type, in that they detect the presence of their address or ID code in the broadcast message announcing a multicast transmission and then set themselves to receive the multicast message if they are in the list of addresses or ID codes of the multicast transmission announcing broadcast message.

The transmit/receive client unit may be a telephone that uses a SIP protocol or possibly a softphone or a smartphone. It may be preferably equipped with input means for input of control or alphanumeric data and/or controls through a graphical interface. By the graphical interface, for example, the composition of the group of message recipients may be easily defined, for instance by selecting the receiver units within an image of the communication network structure on a screen, such as a touch screen. Further alternative selection means may be envisaged among those known and used in electronic devices.

The receiver units may also be telephones or communication units that use the SIP protocol and are enabled for transmission and reception. In order to avoid any management problem, transmission enabling means may be provided, that may be of hardware and/or software type, such as hardware and/or software keys. In this case, each of the receiver units may operate as a transmit/receive client unit to initiate a nonconventional multicast transmission, i.e. from a temporary client unit, other than the one that is stably configured in the network.

This may be easily achieved by using the VoIP communication technology and an Ethernet network connection. The various alternative configurations and/or selections for enabling certain features may be easily set either locally or remotely by using appropriate enabling keys and enabling software, without any change to the hardware structure of the network and of the units connected thereto.

In one embodiment, the multicast communication server uses a SIP protocol to establish communication and exchange data with the transmit/receive client unit; a SDP protocol for describing the RTP session, i.e. the voice transport protocol, as well as a protocol for announcing the multicast session.

The use of the system of the invention provides high audio quality and hence superior message intelligibility. The use of the Ethernet network provides a large bandwidth, wherefore the voice message is a broadband message (about 7 kHz).

Also, since the person that dictates the message may hear his/her own voice broadcast from the receiver unit, the end-to-end delay is a critical aspect in message transmission and a short delay is ensured by avoiding compression of the audio message.

The audio message may be provided in various formats and particularly the system provides, without limitation, a preferred format in which the signal is in an uncompressed broadband 16 kHz PCM format. Otherwise, particularly when a narrow bandwidth is available, the format will be G.722, whereas for telephone bandwidth operation the preferred format will be G.711.

While the system of the invention may have various applications, it has been particularly designed for railway networks, namely for broadcasting multicast announcements in tunnels.

Here the communication system is a telephone communication system for communication between a plurality of emergency telephones and at least one telephone operator station, particularly in railway tunnels, a telephone operator station being provided, which is composed of a transmit/receive client unit at least at one of the entrances of the tunnel and a plurality of emergency telephones being arranged all along the railway line within the tunnel, spaced at predetermined distances and consisting each of one receiver unit with at least one speaker for broadcasting an audio message, a connection exchange being provided at one of the entrances.

Further improvements of the invention will form the subject of the dependent claims.

The characteristics of the invention and the advantages derived therefrom will appear more clearly from the following description of a non-limiting embodiment, illustrated in the annexed drawings, in which:

Fig. 1 shows a block diagram of the system of the invention in its particular application to railway tunnels.

Fig. 2 shows a functional diagram of the system of the invention for broadcasting of multicast sound messages from a remote location.

Fig. 3 shows a functional diagram of the system of the present invention for broadcasting of multicast sound messages from a local location.

Fig. 4 shows the logical diagram of the system server which manages the communication network of the transmit/receive client units and the receiver units and executes the IP PBX program (PBX operating on Intranet protocol), the server unit program for multicast communication called Public Announcement Server and the diagnostic programs.
Fig. 5 shows the logical diagram of a receiver unit consisting of a VoIP telephone which is called, in this particular railway application, Help Point.
Fig. 6 shows the logical diagram of the transmit/receive client unit.

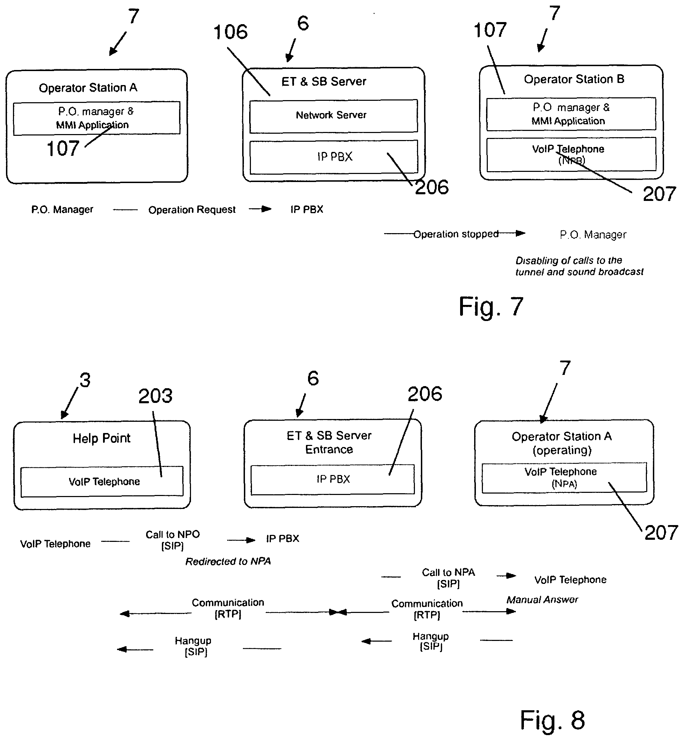

Fig. 7 shows a flow chart concerning operation transfer from one transmit/receive client unit to another transmit/receive client unit which client units are known as operator station in the particular application described herein.
Fig. 8 shows the flow chart concerning telephone communication from a receiver unit, i.e. a Help Point to an operator station, i.e. a transmit/receive client unit.

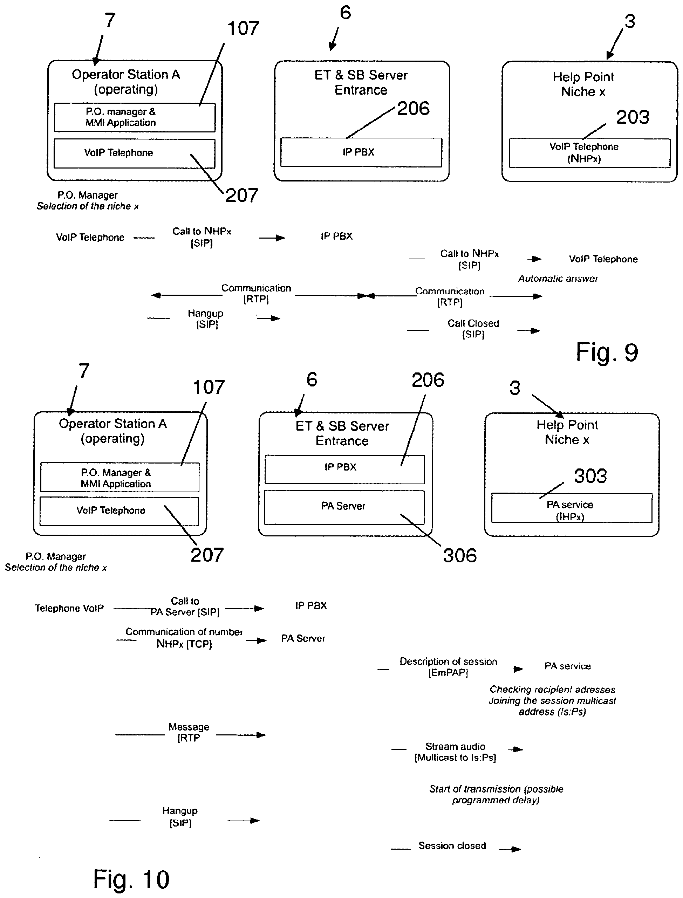

Fig. 9 shows the flow chart concerning telephone communication from an operator station, i.e. a transmit/receive client unit to a receiver unit, i.e. a Help Point.
Fig. 10 shows the flow chart concerning the broadcast of a free voice message in multicast mode, which is transmitted from an operator station, i.e. a transmit/receive client unit and is broadcast through one or more receiver units, i.e. Help Points.

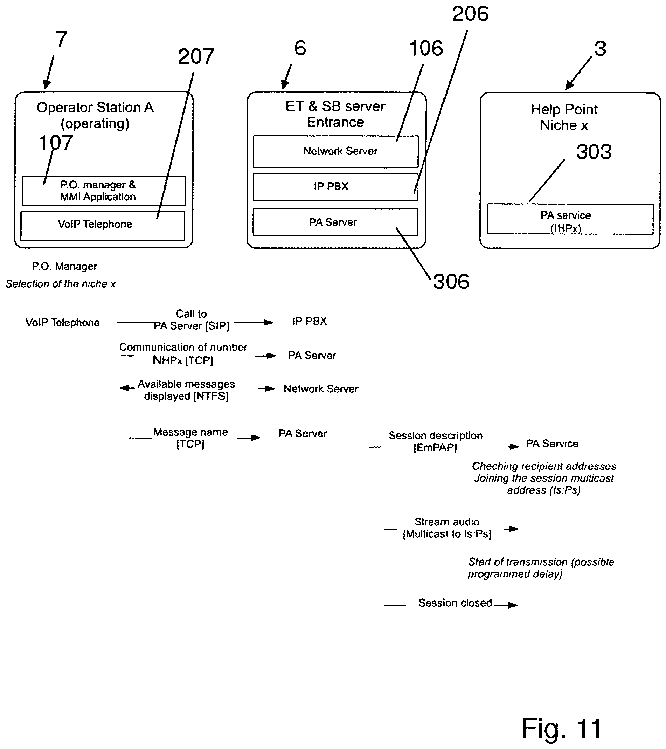

Fig. 11 shows a diagram like that of Fig. 10, in which a pre-recorded voice message is transmitted instead of a free voice message.

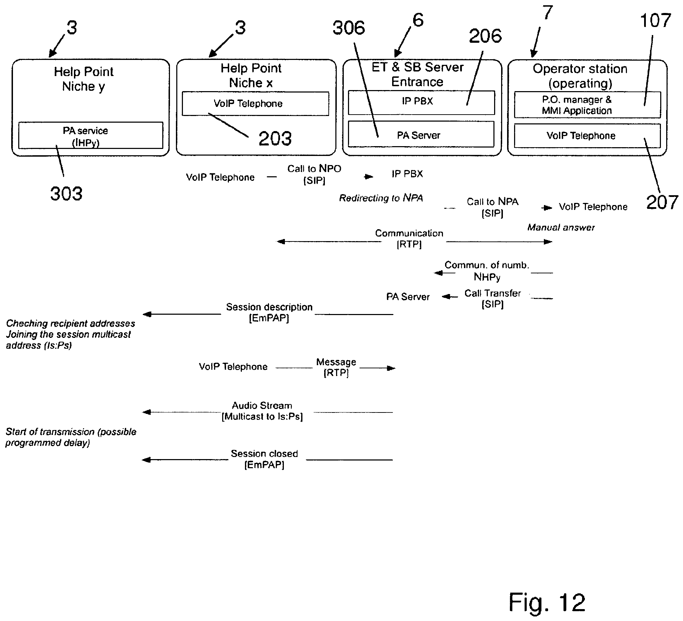

Fig. 12 shows a block diagram of the transmission of a voice message from a receiver unit, i.e. a Help Point, including the steps for requiring transmission to be enabled.

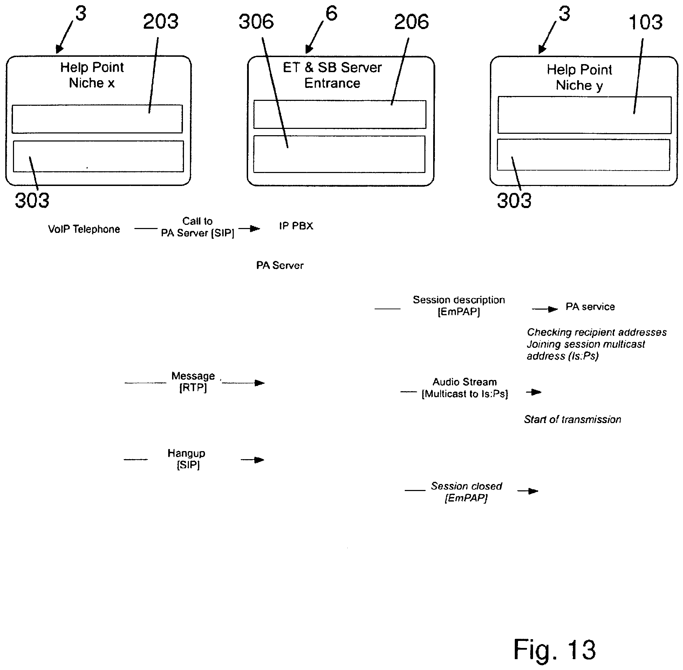

Fig. 13 shows a block diagram of the transmission of a voice message from a receiver unit, i.e. a Help Point, without requiring transmission to be enabled.

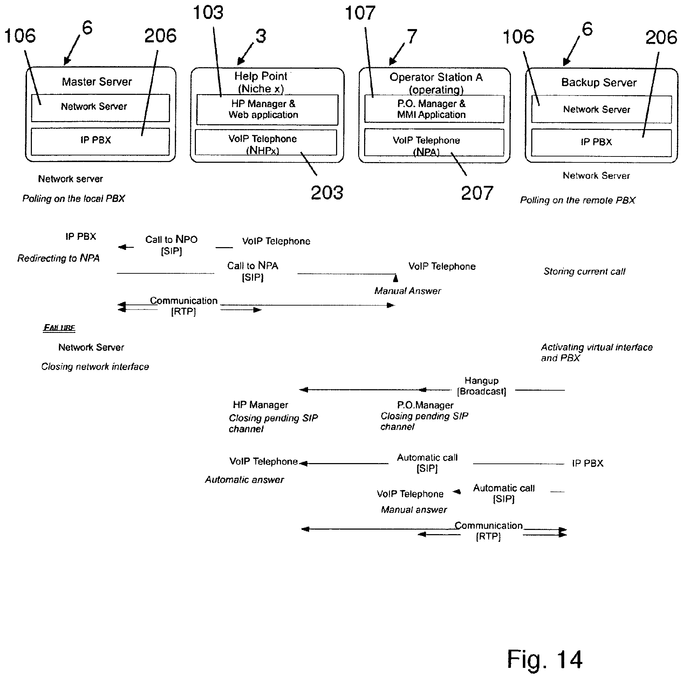

Fig. 14 shows a block diagram concerning failure management functions during communication.
Fig. 15 shows a flow chart of the application that acts as the multicast communication server, i.e. the so-called Public Announcement Server, related to the particular application described herein.

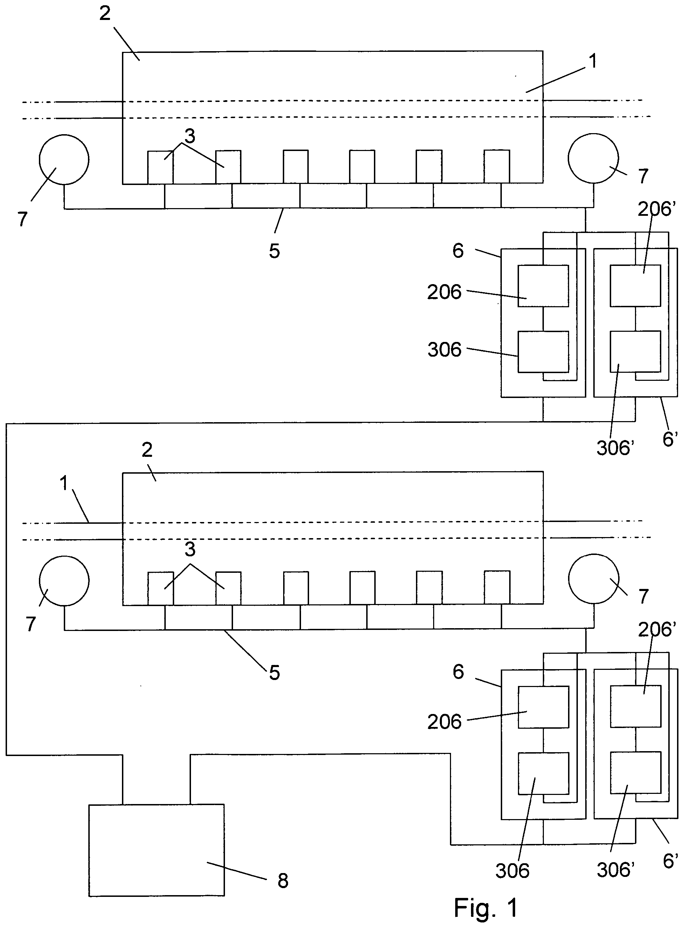

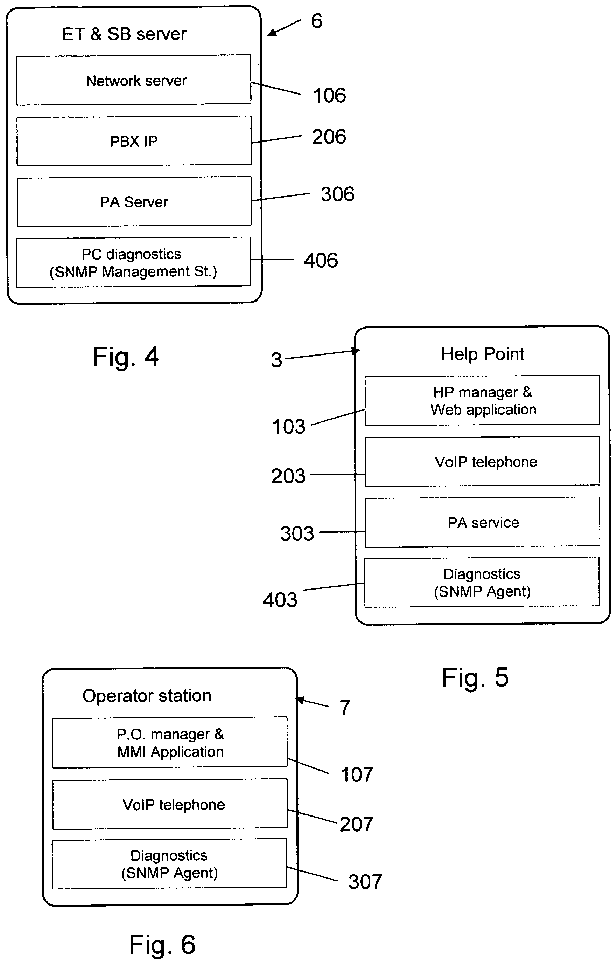

Figure 1 is a diagrammatic view of a railway line 1 that passes through a tunnel 2. In the tunnel 2, typically at niches (not shown) designed for sheltering the personnel upon passage of a train there are a plurality of receiver units 3 which are known as Help Points, each consisting of an IP telephone i.e. a so-called VoIP telephone. Each telephone communicates through a network interface and a network line 5 with a logical communication management unit 6, known as emergency telephony and sound broadcast server (ET and SB server). As shown in Figure 4, the ET and SB server 6 carry out several tasks, each ensured by an application executed by the server. The tasks are indicated in Figure 4 and include the network communication management task 106, the IP PBX task 206, the multicast message communication server task, designated by numeral 306 and defined with reference to the particular PA Server application, i.e. Public Announcement Server. Furthermore, the ET and SB server 6 carries out diagnostic tasks on the computerized unit that executes the various applications to handle the various tasks 106, 206, 306 described above, using a diagnostic application 406 called PC Diagnostics.

The ET and SB server 6 is situated outside the tunnel, in a remote station. The communication network further has at least one, preferably two or more transmit/receive client units 7 connected thereto, which are known as Operator Station and consist of VoIP telephones. The receiver units 3 and said transmit/receive client units 7, i.e. the Help Points and the Operator stations are different first of all in that they have different enable conditions. The operator stations are designed to initialize sessions for transmission of multicast messages and transmission of said messages in the various possible forms, whereas the receiver units 3, i.e. the Help Points are designed for multicast reception of said messages and broadcast thereof. In the particular application in which said receiver units 3 are VoIP telephones, messages may be also broadcast using particular procedures for enabling and/or activating transmission even in a receiver unit 3.

Referring to Figure 6, there is shown the block diagram of a transmit/receive client unit 7, whereas the block diagram of Figure 5 shows an example of configuration of a receiver unit 3, i.e. a Help Point.

The Operator Station is a hardware/software unit with programs loaded therein for causing the hardware to perform certain tasks. The client unit 7 executes a control and management application, called P.O. manager and a MMI (Man Machine Interface) application, designated by numeral 107, which basically ensure interfacing and management of the transmit/receive client unit 7. Furthermore, the client unit 7 has a VoIP telephone function, as designated by numeral 207 and also acts as a diagnostic agent, as designated by numeral 307.

Similarly, referring to Figure 5, the receiver unit 3 is also a hardware/software unit, with applications loaded therein, whose execution causes the hardware to perform tasks specific to said receiver units 3. Numeral 103 designates the management application and corresponding tasks for the Help Point, i.e. the receiver unit 3, which are embodied by a Web application. Numeral 203 designates the VoIP telephone application and corresponding tasks and numeral 303 designates the application and corresponding tasks that allow the receiver unit 3 to operate as a service unit, i.e. as a unit for broadcasting the multicast messages transmitted by the server 6 and called PA service (Public Announcement Service). Like the transmit/receive client unit 7, the receiver units 3 can also feature a diagnostic application, designated by numeral 403.

Turning back to Figure 1, the railway network can include several tunnels, each being associated with a multicast message transmission system, operating on VoIP technology.

To exemplify this condition, Figure 1 shows two tunnels only. The communication management servers 6 are designed to be dedicated each to the system of one tunnel, whereas a central server 8 is provided for managing the local communication management servers 6.

The ET & SB system server 6 represents the central apparatus of the system for Emergency Telephony and Sound Broadcast of messages in the tunnel, i.e. the subsystem that manages the tasks that will be described in greater detail below, and allows communication between the various peripheral apparatus, i.e. the transmit/receive client units 8 (Operator stations) and the receiver units 3 (Help Points).

As explained in greater detail hereinafter, due to its central position, this server shall have a redundant configuration, as shown by 6' in Figure 1, to allow automatic recovery of system operation by a backup server 6' in case of failure of the master server 6.

Referring to the structures of Figures 4 to 6, particular embodiments of the ET & SB server 6 will be now described, i.e. the system server, the transmit/receive client units 7, so-called operator stations or terminals and the receiver units 3, so-called Help Points or emergency terminals.

A transmit/receive client unit, called Operator Station or Terminal, may be of two different types:

A programmable videographic terminal, with a user-friendly interface.

A simple VoIP keypad telephone.

In the former case, the application implemented in the Operator telephone terminal carries out the following tasks:

- registering with the IP PBX 206;
- coming into operation, upon the operator's request;
- periodically repeating registration (every 15 seconds max. or when requested by the IP PBX 206) to ensure service continuity in case of failure of the IP PBX 206;
- closing the active Session Initialization Protocol (SIP) channels, when a particular broadcast control is received from the system server 6;
- enabling and disabling, if required, local sound broadcasting, i.e. sound broadcasting from predetermined receiver units 3;
- coding and decoding voice signals during telephone communication;
- opening a TCP socket to the IP PBX 206 for remote control of system status and information transmission;
- displaying the status of all the telephones, i.e. all the transmit/receive client units 7 and all the receiver units 3 within the line, using icons and colors;
- storing and displaying, when requested, the call history;
- connecting, via Network File System NFS, to the directory of the server 6 which contains pre-recorded messages;
- allowing remote configuration;
- allowing remote software update;
- sending diagnostic data, using the Simple Network Management Protocol (SNMP);
- joining the multicast group of the sound broadcasting session, for messages to be heard during local broadcasting or remote broadcasting of pre-recorded messages;
- activating the room monitoring.

In the latter case, the transmit/receive client unit 7, i.e. the Operator terminal has all the standard features of a last-generation VoIP telephone. The graphic "information" part of the console may be implemented, in this case, in the server or in a client of a supervision system.

The information which must be displayed to the user by the graphic interface for each terminal includes:

- Availability of the terminal 7 (correctly registered terminal and available line);
- Status of the terminal 7 (idle, busy, call being requested, sound being broadcast).

Concerning the exchange of information between the transmit/receive client unit 7, i.e. the Operator terminal and the IP PBX 206, the latter is equipped with a TCP server 106 which may be interrogated to receive system status information (in the form of events) or to transmit controls.

The Operator terminal shall open a TCP socket in "client" mode to the port 5038 of the server in which the IP PBX 206 is executed at the virtual address [TBD].

The Operator terminal 7 will send an authentication string to the IP PBX 206, and the IP PBX 206 will transmit a confirmation message, while making the channel available for transmission of controls and reception of information.

As the PBX receives an authentication request, it starts to send the transmit/receive client unit 7 a series of events, for monitoring the status of the transmit/receive client units 7, the receiver units 3 and any other telephones or softphones registered with the PBX and the active channels.

Figure 6 shows the logical block diagram of a transmit/receive client unit 7 of the type having videographic features.

The control and management application 107, called P.O. manager and the MMI (Man Machine Interface) application manage all the basic services of the transmit/receive client unit 7, which may particularly include:

executing the MMI application with its graphic interface to allow the operator to utilize all the features of the system in graphic form;
requesting operation;
remotely updating the configuration by file download;
remotely updating local parameters through a Web application;
activating the appropriate service according to user's requests (emergency telephony, service telephony or sound broadcasting);
displaying brief diagnostic information from the receiver units 3 in the tunnel;
exchanging data with the ET and SB server 6 via NFS for selecting the message to be broadcast, in case of broadcast of pre-recorded messages;
exchanging data with the IP PBX 206 through a TCP socket;
authorizing local sound broadcast when requested by a Help Point, i.e. a receiver unit 3;
synchronizing the timer with the NTP server in the network (NTP client).

The transmit/receive client unit 7 also includes a SIP softphone, i.e. a virtual VoIP telephone 207, whose graphic interface is included in the MMI application 107.

In addition to allowing telephone communication between the various terminals of the system, it also allows to access the sound broadcasting function.

Finally, the diagnostic unit (SNMP Agent) 307 is designed to collect diagnostic data from the various components of the telephone and send notifications (TRAPs) to diagnostics servers 6, i.e. to the applications 406 therein.

Concerning the receiver units 3, i.e. Help Points, each of them consists of a telephone terminal with an application implemented therein for ensuring the following tasks:

registering with the SIP IP PBX 206;
periodically repeating registration (every 15 seconds max. or when requested by the PBX) to ensure service continuity in case of failure of the IP PBX 206;
automatically answering incoming calls;
closing the active SIP channels, when a particular broadcast control is received from the ET and SB system server 6;
allowing the user to request for enabling local sound broadcast, i.e. use of the telephone terminal also for transmission;
coding and decoding voice signals during telephone communication;
processing signals for echo cancellation both during speakerphone calls and during local sound broadcast;
activating a background process for sound broadcast;
communicating with routing apparatus to join a multicast group using the IGMP protocol;
transmitting messages to the amplifier for sound messages to be broadcasted through speakers;
allowing the speakerphone function to be used at the same time as sound broadcast;
during activation, acquiring an address (e.g. identical or related to the number of the tunnel niche in which the terminal is located) in the form of DTMF tones transmitted by the operator through a handheld electronic device;
allowing remote configuration (through a tftp client and a Web page for updating local parameters);
allowing remote software update;
sending diagnostic data, using SNMP;
sending a courtesy message to users waiting for an answer (the message may be transmitted, for instance, by the IP PBX 206 that is handling the call);
allowing automatic calibration of the amplifier, the speaker and the microphone;
providing brief audio quality information through the transmission of a test signal (e.g. a pink noise signal) to the amplifier and processing the signal perceived by the microphone.

In the illustrated embodiment, the configuration parameters common to all receiver units 3, that can be edited through the upload of a configuration file include:

SIP Gateway IP Address;
telephone numbers to be contacted for emergency calls and service calls;
parameters required for activation of N, TR Voice Guidance sessions, as described in greater detail below;

the local configuration parameters for each niche, that can be edited through a Web application, include:

niche ID;
network address;
SIP ID and password;
the respective group for the Voice Guidance feature;
speaker volume and the amplifier gain in case of local and remote sound broadcast;
microphone sensitivity in case of speakerphone communications, room monitoring, local sound broadcast.

According to an advantageous feature, automatic diagnostics may be provided for certain operating parameters of the receiver unit and/or the sound broadcast and communication peripherals associated therewith, such as the amplifier that controls the speaker/s and/or the microphone for dictating voice messages. These parameters include, for example:

amplifier failures;
lack of primary power supply;
door of the housing of the receiver unit 3 open;
receiver unit state, i.e. non configured telephone.

Figure 5 shows a block logical diagram of the receiver unit 3.

Numeral 103 designates the so-called HP manager, which manages all basic services of the receiver unit 3 as mentioned above, including:

initial configuration during activation (acquiring an address in the form of DTMF tones transmitted by the operator through a handheld electronic device);
remotely updating the configuration by file download;
remotely updating local parameters through a Web application;
activating the appropriate service according to user's requests (emergency telephony, service telephony or sound broadcasting);
automatically calibrating the amplifier, the speaker and the microphone during setup;
transmitting a test signal to the amplifier and processing the signal perceived by the microphone to provide brief audio quality information;
synchronizing the timer with the NTP server in the network (NTP client).

The receiver unit also includes a VoIP telephone 203 in the form of a SIP softphone with an echo cancellation feature.

Furthermore, the receiver unit also includes the PA Service application, designated by numeral 303 which manages all the services required for remote sound broadcast, i.e.:

receiving and managing session announcement messages from the operator console, i.e. the transmit/receive client unit 7 or a receiver unit enabled for announcement transmission;
joining the multicast address and ensuring synchronization;
receiving the RTP (Real-Time Transport) stream and transferring it to the amplifier at the time indicated by the EP and SB server 6;
closing the session when requested by the PA Server 306;
managing the "Voice Guidance" feature when requested by the Operator Station, as described below;
canceling echo and reducing the Larsen effect.

Finally, like the client unit 7, the receiver unit also includes a diagnostics application 403. This application may be provided in the form of SNMP Agent, and adapted to collect diagnostic data from the various components of the receiver unit 3 and send notifications (TRAPs) to the diagnostics unit 406 executed by the ET & SB server 6.

Referring to Figure 4, the ET & SB server 6, i.e. the system server, comprises a hardware/software unit acting as a network server. The network server application shall manage all network services and particularly:

- updating the configuration of the various hosts, i.e. the transmit/receive client units 7 and the receiver units 3 in the network, by uploading files or opening Web applications residing on the remote apparatus;
- sharing the directory with the pre-recorded messages over the network, so that they can be seen and selected from the Operator Station;
- providing a unique time reference (NTP Server) to the hosts for synchronization of the various apparatus over the network.

The network server 106 also has redundancy management features.

To ensure service continuity in case of failure or disconnection of the IP PBX 206, a redundant configuration will be provided for this hardware/software apparatus, which means that two servers with IP PBX functions are provided, a master 6 and a hot backup 6'. Figure 1 shows the case in which the whole server 6 is doubled by the server 6'. This is only suggested by way of example, because the IP PBX server, which consists of a PC application program, shall not necessarily be executed by the same hardware unit, but the server 6 may be composed of several separate hardware units, the two alternative solutions being perfectly equivalent. In any case, a redundant configuration is provided in Figure 1 for the server 6, as well as for the application that performs the IP PBX tasks, as shown by numerals 206, 206' and the application that performs the multicast communication server tasks, as shown by numerals 306, 306'.

Under normal conditions, one of the two servers 6, 6' and particularly one of the two IP PBXs 206, 206' will be operative and provide the services required by the transmit/receive client unit 7 (Operator Station) and the receiver units 3 (Help Points) within the network, which are in the form of telephones, whereas the other server and particularly the other IP PBX will be in a stand-by state and provide a backup function.

Redundancy is ensured by using a virtual network address and by implementing a monitoring protocol. Thus, the operating IP PBX 206 will be checked for reachability through network interface polling. If the operating IP PBX 206 is found to be no longer reachable, the back-up PBX 206' automatically takes its place.

An additional characteristic consists in providing another feature, consisting in a hardware/software means that directly communicates with the IP PBX 206, 206' and is designed to detect software failures. Failure of the IP PBX 206, 206' to answer is interpreted as a software crash, and starts a recovery procedure.

In both cases (network interruption or software failure):

- the transmit/receive client units 7 (Operator Station) and the receiver units 3 (Help Points) in the network will migrate from the faulty PBX 206 to the back-up one 206' in not more than 15 seconds;

- the backup PBX also has means for starting a procedure for recovering communications interrupted due to the failure.

A third switching unit possibly installed at a central station will be specially designed to interface the local network with the public PSTN network or to act as a concentration for various subsystems in case of a multi-tunnel system.

When considering redundancy in greater detail, a protocol known as Common Address Redundancy Protocol, or CARP, is used, which allows to manage PBX redundancy using a virtual network address. The server having the main role is identified as the "master", whereas the secondary server is identified as "backup". The protocol is implemented on the network server 106 through an application, such as the freeware application UCARP release 1.2.

In addition to the above protocol, an additional feature of failure management, called "Failure Manager" is executed in the network server.

Failure Manager is an application that checks the presence and reachability of the master IP PBX 206 (which operates under normal conditions) through a particular server port which has a management interface (port 5038). When such interface cannot answer, the IP PBX 206' is operated on the backup server 6', and starts a procedure for recovery of calls interrupted by the failure, while preventing any false contact or network failure from causing reconnection of the master IP PBX 206 on the master server 6 without an action by maintenance personnel.

The failure management application (Failure Manager) operates both on the master server 6 and on the backup server 6'. On the master server 6 it is designed to exclude the master IP PBX 206 in case of failure. On the backup server 6', it ensures continuous update of the features operating on the master IP PBX 205 and if open or improperly closed links are found as the backup server 6' is operated, it sends a broadcast message to cause all telephones, i.e. all transmit/receive client units (Operator Stations) 7 and all receiver units (Help Points) to close any SIP channels still active, and then automatically regenerates the calls still pending after the failure.

The network server 106 also uses corresponding application programs to execute:

services for updating configuration of the clients, i.e. the transmit/receive client units 7 and/or the receiver units 3; services for exchanging data by means of a Network File System NFS, which allows the directory with pre-recorded messages to be shared over the network.

Concerning the IP PBX 206, also known as VoIP PBX, it consists of a software application which is executed, for instance by a PX server, i.e. the communication management server 6, which is called Emergency Telephony and Sound Broadcast server (ET & SB server).

In one embodiment, the VoIP IP PBX 206 consists of a software application appropriately configured for special Emergency Telephony applications, called Digium Asterisk.

Referring to redundancy management, the following tables show that Failure Manager, which is executed by the network server 106, operates in combination with the special IP PBX application.

Local Failure Manager, in the master communication management server 6

| Type of failure detected | Detection method | Failure management |
|---|---|---|
| Network interruption (disconnected or cut cable, switch failure) | Ucarp. | Forced closure of the network interface eth0 if the network becomes reachable again |
| Sudden closure or crash of Asterisk SW | Ping of Asterisk management interface | Forced closure of the network interface eth0 |

**Remote Failure Manager, in the backup communication management server 6'**

| Type of failure detected | Detection method | Failure management |
|---|---|---|
| Network interruption (disconnected or cut cable, switch failure) | Ping of Asterisk management interface | Operation of the backup feature, recovery of active calls |
| Sudden closure or crash of Asterisk SW | | |
| Sudden shutdown of the master server | | |

Telephone communications between the telephones in the network, i.e. the transmit/receive client units 7 (Operator Station) and the receiver units 3 (Help Points) occur through an IP v4 network facility. Therefore, the communication channel is wholly digital and based on standard signaling, communication and coding protocols.

Call switching and management of advanced services (call forwarding, multi-conference calls, call recording, history) are managed by an IP PBX 206.

The IETF SIP (Session Initiation Protocol) may be used as a signaling protocol, allowing to initiate and manage telephone calls over an IP network.

The IP PBX 206 is designed to perform the following tasks:

managing the operation of the operator console, i.e. the transmit/receive client units 7;
establishing communication between the caller and the called person;
storing the call history;
enabling multi-conference calls upon request:

enabling call recording on dedicated devices upon request or automatically (optional feature);
recording calls on file, if requested (desired);
interfacing the local network with the public PSTN network.

In accordance with an additional feature, the calls may be originated either from the Operator Station, i.e. a transmit/receive client unit 7 or from an emergency telephone, i.e. a so-called Help Point 3.

In one embodiment, the emergency telephones, i.e. the receiver units 3 are designed for automatic reception. Several different operating options may be provided for closing communications. In one embodiment, for instance, a call or a communication request originated from an Operator Station, i.e. a transmit/receive client unit 7 or a Help Point, i.e. a receiver unit 3 that can be enabled for transmission by means of a hardware or software enabling key, e.g. by pressing an enabling pushbutton, may be only closed if required by the Operator Station, i.e. the transmit/receive client unit 7. A call originated by a Help Point, i.e. a receiver unit 3 which is enabled for transmission by a key switch, may be closed by the Help Point itself, e.g. by setting the switch back to its idle position.

In one embodiment, the communication channel is advantageously based on real time transport protocols. Particularly, the preferred transport protocol is the Real-Time Protocol/User Datagram Protocol (RTP/UDP).

In accordance with a further advantageous characteristic of this embodiment, in order to ensure that communication is as natural as possible, the total delay between the time at which the caller has uttered a word and the time at which the word is heard by the receiver should be of less than 150 ms (ITU-T G.114 recommendation).

This delay is intended to include:

signal propagation delay over the line, particularly over a fiber-optic line

processing delays (creation of packets, generation of header samples, compression)
queuing delay (packet waiting time in case of congestion)
jitter buffer delay
network delay time

Concerning telephone voice communications, various coding protocols may be provided, including for instance those that meet the following specifications:

standard G.711 protocol (a-law e μ-law)
telephone band (4 kHz)
Frame duration: 20 ms

As mentioned above, the IP PBX also ensures management of advanced services, such as multi-conference. In this case, several users, either situated in a tunnel, i.e. having receiver units 3 enabled for transmission, or in Operator Stations, i.e. transmit/receive client units 7, can communicate in "multi-conference" mode.
Therefore, the IP PBX 206 has the function of establishing communication between groups of users (preset or manually selected) and of generating an audio stream resulting from the composition of the signals from the various users. In terms of coding or maximum allowed delay, the system will operate like in a normal telephone communication.
Concerning the multicast communication server 306 known as PA server, this has the function of managing all the services required for Sound Broadcast of pre-recorded messages and represents the proxy for local and remote sound broadcast.
Particularly the multicast communication server 306 has an interface to the IP PBX 206, which consists of a virtual telephone or softphone, whereby it is registered with the IP PBX 206. Furthermore, the PA server receives and processes information about the message to be transmitted in case of broadcast of pre-recorded messages and receives and processes information about the IP addresses whereto the stream is directed.
The multicast communication server 306 transmits at its output the multicast session data to the receiver units 3 indicated as message recipients and generates the stream multicast/UDP containing the audio message.
The sound broadcast session is closed at the end of the pre-recorded message or in case of disconnection by the operator.

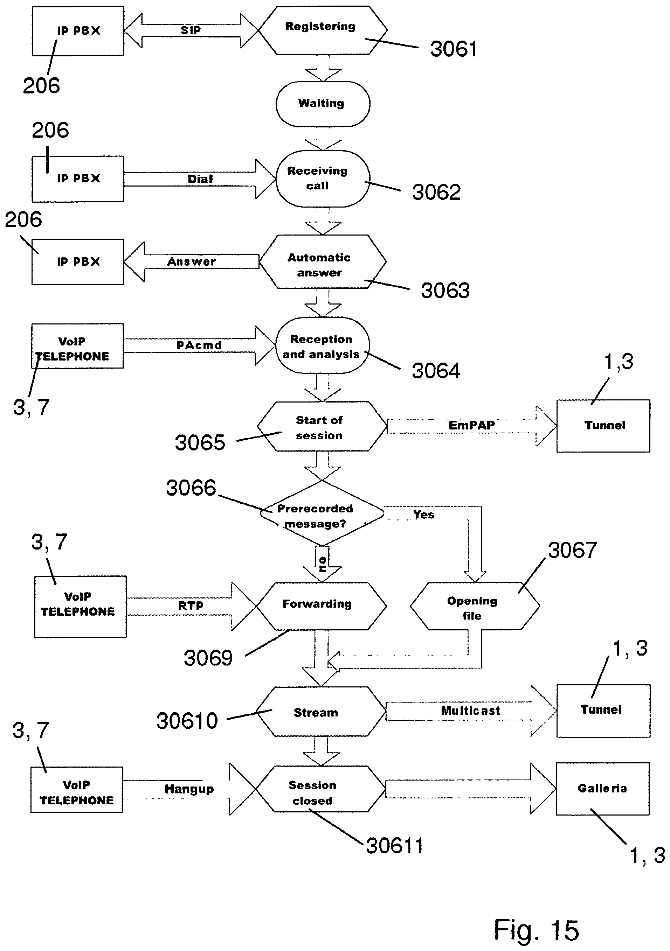

Figure 15 shows a flow chart of the multicast communication server, i.e. the sound broadcast server 306 also known as PA Server. This is an application that, once in communication with a VoiIP telephone via a SIP, starts a multicast streaming session to the Sound Broadcast system which in this case consists of the receiver units 3, with the amplifiers, the speakers and the microphones associated therewith. The stream contents may be of two types:

audio received in real time from the calling VoIP telephone, i.e. the client unit 7 or a receiver unit 3 enabled for transmission;
an audio file stored in the hard disk of the ET and SB server 6.

In the former case, the multicast communication server 306 shall ensure a maximum latency time of 20 ms.
The multicast communication server 306, which in fact interacts with the PBX like a common softphone, is set in automatic answering mode and allows reception of text messages (Instant Messaging).
Referring to the flow chart of Figure 15, as the system is started, and at each subsequent restart, the multicast communication server shall register with the IP PBX 206, like a normal SIP softphone, as shown by step 3061. Therefore, it shall send the IP PBX 206 the information required by the SIP protocol for its authentication, such as its numeric address (user name) and the password.
Once this step is completed, the multicast communication server 306 will wait for a call from one of the telephones in the system or other devices that are part of the transmit/receive client units 7 o the receiver units 3..
In the step of reception of a SIP connection request call 3062, the multicast communication server 306 answers automatically 3063.
In case of multiple simultaneous connection requests (if the system allows pre-authorized local broadcasting), the first one will be granted access to this feature, whereas the other users will receive a courtesy message and be queued.
The two SIP applications being connected will negotiate the codec to be used, and preferably select the one with the largest bandwidth Generally, communications between the Operator Station, i.e. the transmit/receive client unit 7 and the multicast communication server 306 may possibly occur using a GH. 722 codec. As a result, the transmit/receive client unit 7 or the calling receiver unit 3 and the multicast communication server 306 being called are in communication with each other, but the transmission of the audio signal by the caller has no effect.
At the same time as the call request, the multicast communication server 306 also receives a control containing the information required for initiating the session: session type (speakerphone, pre-recorded messages, voice guidance) and recipient addresses, and this control is analyzed as indicated by step 3064.

Each multicast session is described by the multicast communication server by means of a SDP (Session Description Protocol, RFC 2327) file, which uses a special transport protocol.

Advantageously, the preferred protocol requires a session announcement message to be sent over the network, and broadcast as shown in step 3065.

In case of degraded operation of the session announcement network, it shall also contain time information, to allow the various users to initiate broadcast in a synchronized manner, and cancel the delays caused by the network. Such time information will be a system-specific configurable parameter and shall be set by the server based on a maximum estimated delay.

Concerning stream generation, once the session has been announced at step 3065, the multicast communication server will promptly start to emit a RTP/Multicast steam 3066 using as a source either the audio signal coming from the client unit 7 or the calling receiver unit 3, or the pre-recorded file indicated in the control.

If the control indicates that a pre-recorded message has to be transmitted, at steps 3067, 3068, the multicast communication server 306 will start transmitting the indicated message, at 30610. If such signal has been compressed, then the server 306 will decompress it before transmitting it to the multicast unit.

When the message is a voice message directly dictated by the user at the client unit 7 or at a receiver unit 3, then the message is forwarded directly 3069, and directly generates the stream 30610.

The session may close, at step 30611, upon hang-up by the calling telephone connected to the server 306, i.e. the client unit 7 or a receiver unit 3, or at the end of the pre-recorded file.

Concerning control transmission, controls are advantageously sent to the multicast communication server 306 in the form of text messages, using the SIP MESSAGE method.

Referring to an advantageous improvement of the system of the present invention, and as mentioned above, in order to avoid echo noise between, for instance, a receiver unit 3 enabled for transmission and the messages transmitted by the other receiver units 3, i.e. in order to prevent both a message transmitting user from hearing the message transmitted by the other receiver units 3 with a certain delay, and the messages transmitted by the receiver units 3 of a system, e.g. in a tunnel, from causing mutual noise and making the message unintelligible, the transmission of messages among the various receiver units should be synchronized, considering that such units are at a predetermined distance from each other and that the signal from the multicast communication server has different running times and reaches the various receivers at different times.

Depending on the configuration of the sound broadcast system and particularly on the distances between the speakers of two successive receiver units 3 along the railway line 1, the network has been found to require predetermined latency values.

Referring to the analysis of acoustic conditions, an intelligible reception of the broadcast audio signal has been found to require an echo delay value of not more than 60 ms. No problem arises in this case if the network latency is below 15 ms, which can be easily obtained using currently available network switches.

Nonetheless, to obviate the problems associated with echoes, the invention provides means for synchronizing the acoustic transmission of messages in each receiver unit of the system.

Under normal operating conditions, the latency introduced by network nodes is such that the maximum delay of 60 ms is not exceeded. If the network loop is broken, for instance, at 2 locations, any path difference between the two tunnel blocks generated thereby and the use of a link outside the tunnel might introduce a longer delay.

Therefore, the invention allows sound to be reproduced with a programmed, i.e. predetermined delay. Such delay, which may be normally a zero delay, is set by the server 6 in case of degraded operation of the system due to a broken network loop. This may occur by providing a NTP server 106 in the network, which is designed to make all information required for synchronizing the internal date and time available to all nodes.

Before starting the streaming session, the multicast communication server 306 for sound broadcasting sends an announcement packet to the receiver units 3 of the tunnel and enables the receiver units 3 selected by the operator for audio reproduction. This packet contains the addresses of the receiver units 3 to be enabled and also a description file of the Session Description Protocol (SDP) type, indicating the multicast group and the port designed for streaming, and any information required for synchronization and for starting a voice guidance session to be described below.

The addresses of the receiver units 3 to be enabled coincide with the SIP user IDs. In case of group calls (even niches, odd niches, windows, all the tunnel, etc.) preset group addresses may be used instead of real addresses. As the session announcement arrives, each receiver unit 3 checks that the address field contains, in addition to its ID, the IDs of the groups in which it is, as defined in the configuration.

As mentioned above, the terminal, such as the client unit 7 or a receiver unit 3, that enables the sound broadcast feature (centrally or peripherally), may transmit controls to the multicast communication server 306, that may be activated by pressing pushbuttons from an interface, such as a touch screen or another type of interface.

A process enabled on the peripheral terminals will be constantly in listening mode and, as soon as it receives a "session announcement" message, it will check whether its address is among the recipient addresses and if it is, the peripheral terminal will be ready to receive the stream (communicating with the router through the IGMP protocol) and to reproduce it through the amplifier.

According to an additional characteristic of the invention, the possibility of transmitting indications to the receiver units 3 for synchronized broadcast of an audio message provides a particular sound message multicasting feature, which may be defined as a "Voice Guidance" feature. In this case, the message to be broadcast is repeated cyclically, and several groups of receiver units 3 and/or speakers are enabled and disabled for reproduction at a predetermined rate.

Voice guidance is a particular form of remote Sound Broadcast, which causes the receiver units to ensure partial and successive reproduction of the message.

The receiver units 3, such as the emergency telephones in the tunnel, are divided into N groups, with N being set to 3. A time is set for reproduction TR and each group G is associated a delay time (Δti). As it receives the multicast stream, which has been transmitted at the time T0, each receiver unit 3, i.e. each telephone knows that:

it shall start reproduction at the time T0+Δti, where Δti is given by:

$$\Delta ti = \{[D \times (i-1)] \bmod N\} \times TR$$

i=1,..N, is the group in which it is

D= 1, -1 indicates the direction, with "1" denoting increasing niche addresses and "-1" denoting decreasing niche addresses)

it shall cyclically repeat the following operations to the end of the session:

reproducing audio by the horns for a time TR;

waiting a time TR×(N-1);

The effect obtained thereby is a voice that guides people in the tunnel to the most accessible escape route. If desired by the operator that manages the emergency condition, the "guiding voice" may run from one entrance to the other of the tunnel. With the session announcement message, the receiver units 3 will receive information indicating that it is a "Voice Guidance" session, that all the above described features are enabled and that the escape direction is defined by increasing or decreasing niche addresses. Based on such information, the time Δti will be set.

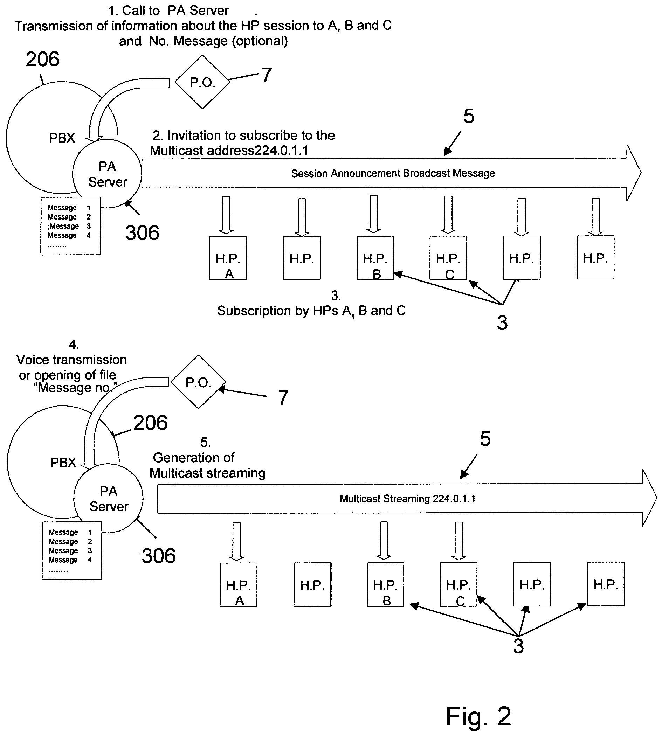

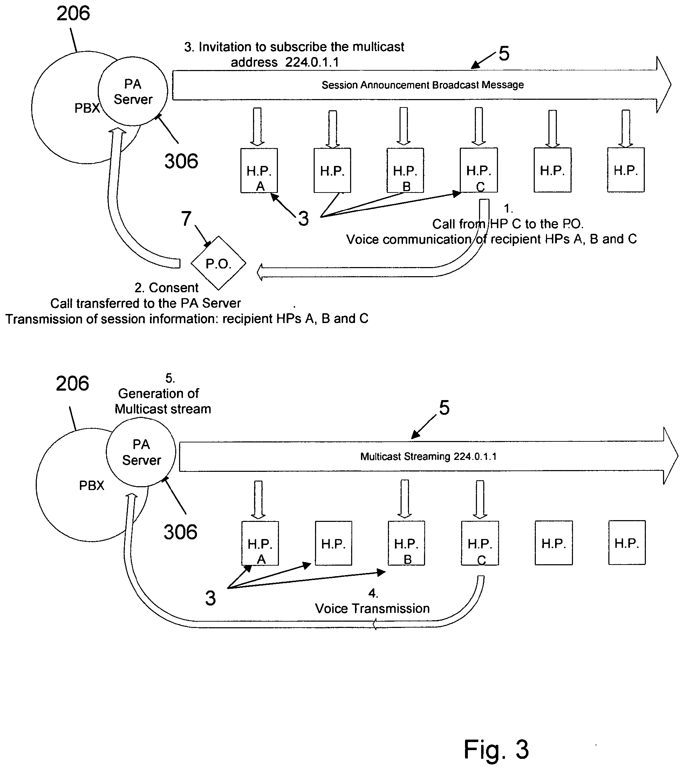

Figures 2 and 3 diagrammatically show two sound broadcasting operation examples, the former with the session being started by a transmit/receive client unit 7, also called remote sound broadcast and the latter with sound broadcast being started by a receiver unit 3, which has been enabled for transmission of the session initialization process.

As mentioned above, either free voice messages or pre-recorded messages may be transmitted, as needed. The multicast stream generation task is performed by the multicast communication server 306, which is seen by the exchange as an ordinary softphone.

Referring to Figure 2, in case of remote sound broadcast, such broadcast is initialized by a transmit/receive client unit 7 and the message to be broadcast may occur on the client unit 7 like an ordinary phone call.

In case of pre-recorded message broadcast, since pre-recorded messages are stored in the multicast communication server 306 (for easier update), the client unit 7 will interact therewith for message selection.

The information with the niches designed for message reception and the file to be reproduced, if any, is transmitted to the IP PBX 206 through TCP packets, if the client unit 7 is of videographic type (and hence programmable), or through a voice menu and pushbutton selection if the client unit 7 is of "standard telephone" type. Then, such information is transmitted to the multicast communication server 306 in the form of text message (Instant Message).

The flow chart of Figure 2 shows all the steps of the procedure. A call is transmitted from the transmit/receive client unit 7 to the multicast communication server 306 and is managed by the IP PBX 206. The multicast communication server transmits a broadcast message in which it announces the start of a multicast session to each of the receiver units 3 over the network. The announcement includes an invitation to said receiver units to subscribe a multicast address. In the example of Figure 2, this occurs for the receiver units 3 designated as HP A, B and C.

Then, the voice message may be directly transmitted by the client unit 7, or a predetermined pre-recorded voice message file may be opened, and the multicast communication server 306 will generate the multicast stream to be transmitted over the network with the subscription address, which will reach the HP A, B and C units only.

In case of local Sound Broadcast, i.e. from one receiver unit 3 only, the tunnel operator who wants to broadcast a voice message shall communicate with the central operator, i.e. at the client unit 7, to indicate the niches where the message has to be broadcast, and wait for enabling.

In addition to enabling, the client unit 7 will transfer the call to the multicast communication server 306, with the information about the intended message receiving niches.

Depending on system configuration, local sound broadcast may not require remote enabling by the operator, in which case the message will be sent to a preset group of terminals.

Figure 3 shows the sequence of steps that are carried out at the start of a local Sound Broadcast session.

Here, particular arrangements will be required to avoid echo and feedback (Larsen effect) noise. Namely, echo cancellation and possibly resonance frequency filtering (adaptive Notch filter) algorithms might be required.

Referring to Figure 3, unlike the session described above with reference to Figure 2, sessions are initialized by a receiver unit within a tunnel niche. Communication is established with the client unit 7 which acts as a receiver unit enabling unit and as an intermediary with the IP PBX 206 and the multicast communication server 306. Here again, information is transmitted about the receiver units that are intended to receive the message, which are designated as A, B and C.

The next steps of session announcement, with a broadcast message generated by the multicast communication server 306, subscription by the receiver units 3 intended as message recipients, and generation and transmission of the audio stream are identical to those of the previous figure 2.

## Claims

1. A communication system for broadcasting audio messages in multicast mode, comprising:

    a Voice over IP (VoIP) audio communication network, which network comprises:

        at least one transmit/receive client unit (7) and one or more receiver units (3) for receiving a multicast audio message sent by the at least one transmit/receive client unit (7) and each of which receiving units having means (303) for broadcasting the audio message;
        an Ethernet network (5) for connecting the said at least one transmit/receive client unit (7) and one or more receiver units (3);
        at least one exchange (206) for connection of the transmit/receive client unit/s (7) and the receiver unit (3) via an Ethernet network, each transmit/receive client unit (7) and each receiver unit (3) being uniquely identified by an IP address;

    **characterized by** the exchange comprising a PBX (206);
    a multicast communication server unit (306) being provided which is connected to the PBX exchange (206) for connecting to the transmit/receive client units (7) and to the receiver units (3), which multicast communication server unit (306) comprises a multicast streamer, a receive/transmit terminal connected to the PBX for communication with the transmit/receive client unit (7) and to the one or more receiver units (3) for transmitting to the means (303) for broadcasting the multicast message of each of the said receiver units (3) in multicast mode;
    the multicast communication server unit (306) receives from the transmit/receive client unit (7) a control containing the information required for initiating the multicast session comprising recipient addresses of the receiver units (3) and generates a session announcement message to be sent over the network (5) enabling the receiver units (3) to receive and broadcast a multicast message stream generated by the multicast message streamer.

2. A communication system as claimed in claim 1, **characterized in that** the receive/transmit terminal of the multicast communication server consists of a softphone operating on the SIP protocol and having its own ID number and username.

3. A system as claimed in claim 1 or 2, **characterized in that** the transmit/receive client unit is a telephone console operating on the SIP protocol.

4. A system as claimed in claim 3, **characterized in that** the transmit/receive client unit is a telephone console operating on the SIP protocol, having the ability of transmitting strings of alphanumeric characters or text.

5. A system as claimed in one or more of the preceding claims, **characterized in that** the receiver units are receive/transmit telephone units that are set in automatic answering mode and can be enabled for transmission by electronic or mechanical software or hardware enabling keys.

6. A system as claimed in one or more of the preceding claims, **characterized in that** the multicast communication server transmits a transmission start message over the network, which message contains information about the addresses and/or ID codes of the receiver units which are intended to receive the message, said message being read by each receiver unit, with the receiver units mentioned in the session start message being activated thereby, which receiver units transmit a reception enabled message to the multicast communication server unit.

7. A system as claimed in one or more of the preceding claims, **characterized in that** the multicast communication unit has a memory for storage of a plurality of acoustic and/or visual messages, which messages are uniquely identified by an ID code and are recalled and transmitted by said multicast communication unit when the latter receives from a transmit/receive client unit a transmission control containing the ID code of one or more of said acoustic or visual messages.

8. A system as claimed in one or more of the preceding claims, **characterized in that** the multicast communication server unit has a generator of audio messages from text messages, said text messages being transmitted to the multicast communication server unit from a transmit/receive client unit.

9. A system as claimed in one or more of the preceding claims, **characterized in that** means are provided for synchronizing the starting time of the audio message broadcasting by the individual receiver units.

10. A system according to claim 9, **characterized in that** the starting time of the audio message broadcasting by the individual receiver units is such that in a predetermined listening position with reference to the position of at least two receiver units, the acoustic contributions of said messages broadcast by said at least two operating units are combined without deteriorating the quality of the transmitted audio message.

11. A system as claimed in claim 9, **characterized in that**, it is provided the possibility of varying a diffusion time delay for each individual receiving unit such that the broadcasting of the acoustic message starts at the same time for each of the said receiving units.

12. A system according to one or more of the preceding claims, **characterized in that** two adjacent receiver units are placed at such a distance one form the other that with an identical starting time of the diffusion of the acoustic message for the said two units the intensity ratio between the signal transmitted by a unit and the signal transmitted by the other receiver unit is below 10dB and/or the delay between the two messages in a predetermined intermediate listening position between the two receiver units is below 60 ms, particularly 45 ms.

13. A system as claimed in claim 9, **characterized in that** the means for synchronizing the start time of audio message broadcast by the various receiver units can be adjusted for the audio message broadcasting start times to be delayed relative to each other according to a path direction and a predetermined speed from a first to a second receiver units of a plurality of receiver units arranged along a predetermined path.

14. A system as claimed in one or more of claims 9 to 13, **characterized in that** the audio messages are in the form of uncompressed data.

15. A system according to one or more of the preceding claims in which before starting the streaming of the multicast message for sound broadcasting, the multicast communication server unit (306) sends an announcement packet to the receiver units (3) enabling the receiver units (3) selected for audio reproduction of the said multicast message, the packet containing the addresses of the said receiver units (3) to be enabled and a description file of the Session Description Protocol SDP type, indicating the multicast group and the port designed for streaming, and information required for synchronization and for starting a voice guidance session.

16. A system as claimed in one or more of the preceding claims, **characterized in that** the connection exchange comprises at least two PBXs, i.e. one operating and the other in stand-by with a back-up function, i.e. a so-called hot backup, there being provided means for detecting the operating condition of the operative PBX and/or the operating condition of the network, and means for automatically switching connection of the transmit/receive client units, the receiver units for broadcasting multicast messages and the multicast communication server unit, for connecting the transmit/receive client units and the receiver units to a multicast communication server unit from either PBX, whereas the PBX/s have means for detection and storage of the communication condition between the various units such as the transmit/receive client units and/or the receiver units and/or other users, and means for recovering communication interrupted upon switching of connections and recorded by said detection and storage means.

17. A system as claimed in one or more of the preceding claims, **characterized in that** it has means for polling the network interface of the operating PBX, and means for indicating the result of the polling procedure to the second stand-by PBX, which is operated, and operates the means for switching connection of transmit/receive client units and/or the receiver units and/or other users and the means for recovering communication interrupted upon switching of connections, when the result of the polling procedure indicates that the network interface of the first PBX is not operative.

**18.** A system as claimed in one or more of the preceding claims, **characterized in that** it a telephone communication system for communication between a plurality of emergency telephones and at least one telephone operator station, particularly in railway tunnels, a telephone operator station being provided, which is composed of a transmit/receive client unit at least at one of the entrances of the tunnel and a plurality of emergency telephones being arranged all along the railway line within the tunnel, spaced at predetermined distances and consisting each of one receiver unit with at least one speaker for broadcasting an audio message, a connection exchange being provided at one of the entrances.

**Patentansprüche**

**1.** Kommunikationssystem zum Rundsenden von Audio-Meldungen im Multicast-Modus, das Folgendes umfasst:

ein Voice over IP (VoIP)-Audio-Kommunikationsnetzwerk, wobei dieses Netzwerk Folgendes umfasst:

mindestens eine Sende/Empfangs-Client-Einheit (7) und eine oder mehrere Empfängereinheiten (3) zum Empfangen einer durch die mindestens eine Sende/Empfangs-Client-Einheit (7) gesendeten Multicast-Audio-Meldung, wobei jede der Empfangseinheiten ein Mittel (303) zum Rundsenden der Audio-Meldung aufweist;
ein Ethernet-Netzwerk (5) zum Verbinden der mindestens einen Sende/Empfangs-Client-Einheit (7) und einer oder mehreren Empfängereinheiten (3);
mindestens eine Vermittlung (206) für die Verbindung der einen oder mehreren Sende/Empfangs-Client-Einheiten (7) und der Empfängereinheit (3) über ein Ethernet-Netzwerk, wobei jede Sende/Empfangs-Client-Einheit (7) und jede Empfängereinheit (3) eindeutig durch eine IP-Adresse identifiziert wird;

**dadurch gekennzeichnet, dass**
die Vermittlung eine Nebenstellenanlage (206) umfasst;
eine Multicast-Kommunikationsservereinheit (306) bereitgestellt ist, die mit der Nebenstellenanlage (206) verbunden ist, um eine Verbindung mit den Sende/Empfangs-Client-Einheiten (7) und den Empfängereinheiten (3) herzustellen, wobei die Multicast-Kommunikationsservereinheit (306) einen Multicast-Streamer umfasst, wobei ein Sende/Empfangs-Endgerät mit der Nebenstellenanlage verbunden ist, um mit der Sende/Empfangs-Client-Einheit (7) und der einen oder den mehreren Empfängereinheiten (3) zu kommunizieren, um an das Mittel (303) zum Rundsenden die Multicast-Meldung einer jeden der Empfängereinheiten (3) im Multicast-Modus zu senden;
die Multicast-Kommunikationsservereinheit (306) von der Sende/Empfangs-Client-Einheit (7) eine Steuerung empfängt, welche die Informationen enthält, die für das Initiieren der Multicast-Sitzung benötigt werden und Empfänger-Adressen der Empfängereinheiten (3) umfassen, und eine Sitzungsankündigungsmeldung generiert, die über das Netzwerk (5) zu senden ist und die Empfängereinheiten (3) in die Lage versetzt, einen durch den Multicast-Meldungsstreamer erzeugten Multicast-Meldungsstream zu empfangen und rundzusenden.

**2.** Kommunikationssystem nach Anspruch 1, **dadurch gekennzeichnet, dass** das Sende/Empfangs-Endgerät des Multicast-Kommunikationsservers aus einem Softphone besteht, das mit dem SIP-Protokoll arbeitet und seine eigene Kennnummer und seinen eigenen Benutzernamen hat.

**3.** System nach Anspruch 1 oder 2, **dadurch gekennzeichnet, dass** die Sende/Empfangs-Client-Einheit eine Telefonkonsole ist, die mit dem SIP-Protokoll arbeitet.

**4.** System nach Anspruch 3, **dadurch gekennzeichnet, dass** die Sende/Empfangs-Client-Einheit eine Telefonkonsole ist, die mit dem SIP-Protokoll arbeitet und die Fähigkeit besitzt, Ketten aus alphanumerischen Zeichen oder Text zu senden.

**5.** System nach einem oder mehreren der vorangehenden Ansprüche, **dadurch gekennzeichnet, dass** die Empfängereinheiten Empfangs/Sende-Telefoneinheiten sind, die in einen automatischen Antwortmodus versetzt sind und für eine Übertragung durch elektronische oder mechanische Software- oder Hardware-Aktivierungsschlüssel aktiviert werden können.

6. System nach einem oder mehreren der vorangehenden Ansprüche, **dadurch gekennzeichnet, dass** der Multicast-Kommunikationsserver eine Übertragungsbeginnmeldung über das Netzwerk sendet, wobei die Meldung Informationen über die Adressen und/oder Kenncodes der Empfängereinheiten enthält, welche die Meldung empfangen sollen, wobei die Meldung durch jede Empfängereinheit gelesen wird, wobei die in der Sitzungsbeginnmeldung genannten Empfängereinheiten dadurch aktiviert werden, wobei diese Empfängereinheiten eine Empfangaktiviert-Meldung an die Multicast-Kommunikationsservereinheit senden.

7. System nach einem oder mehreren der vorangehenden Ansprüche, **dadurch gekennzeichnet, dass** die Multicast-Kommunikationseinheit einen Speicher zum Speichern mehrerer akustischer und/oder visueller Meldungen hat, wobei die Meldungen eindeutig durch einen Kenncode identifiziert sind und durch die Multicast-Kommunikationseinheit abgerufen und gesendet werden, wenn die Multicast-Kommunikationseinheit von einer Sende/Empfangs-Client-Einheit eine Sendesteuerung empfängt, die den Kenncode einer oder mehrerer der akustischen oder visuellen Meldungen enthält.

8. System nach einem oder mehreren der vorangehenden Ansprüche, **dadurch gekennzeichnet, dass** die Multicast-Kommunikationsservereinheit einen Generator für Audio-Meldungen aus Text-Meldungen hat, wobei die Text-Meldungen von einer Sende/Empfangs-Client-Einheit an die Multicast-Kommunikationsservereinheit gesendet werden.

9. System nach einem oder mehreren der vorangehenden Ansprüche, **dadurch gekennzeichnet, dass** ein Mittel bereitgestellt ist, um die Startzeit des Rundsendens der Audio-Meldung durch die einzelnen Empfängereinheiten zu synchronisieren.

10. System nach Anspruch 9, **dadurch gekennzeichnet, dass** die Startzeit des Rundsendens der Audio-Meldung durch die einzelnen Empfängereinheiten so gewählt ist, dass in einer zuvor festgelegten Lauschposition mit Bezug auf die Position von mindestens zwei Empfängereinheiten die akustischen Anteile der durch die mindestens zwei Betriebseinheiten rundgesendeten Meldungen kombiniert werden, ohne die Qualität der gesendeten Audio-Meldung zu verschlechtern.

11. System nach Anspruch 9, **dadurch gekennzeichnet, dass** die Möglichkeit vorgesehen ist, eine Diffusionszeitverzögerung für jede einzelne Empfangseinheit zu variieren, dergestalt, dass das Rundsenden der akustischen Meldung für jede der Empfangseinheiten zur selben Zeit startet.

12. System nach einem oder mehreren der vorangehenden Ansprüche, **dadurch gekennzeichnet, dass** zwei benachbarte Empfängereinheiten in einer solchen Distanz voneinander angeordnet sind, dass bei einer identischen Startzeit der Diffusion der akustischen Meldung für die beiden Einheiten das Intensitätsverhältnis zwischen dem durch eine Einheit gesendeten Signal und dem durch die andere Empfängereinheit gesendeten Signal unter 10 dB liegt und/oder die Verzögerung zwischen den zwei Meldungen in einer zuvor festgelegten Zwischen-Lauschposition zwischen den zwei Empfängereinheiten unter 60 ms und insbesondere bei 45 ms liegt.

13. System nach Anspruch 9, **dadurch gekennzeichnet, dass** das Mittel zum Synchronisieren der Startzeit von durch die verschiedenen Empfängereinheiten rundgesendeten Audio-Meldungen so eingestellt werden kann, dass die Startzeiten des Rundsendens von Audio-Meldungen relativ zueinander gemäß einer Pfadrichtung und einer zuvor festgelegten Geschwindigkeit von einer ersten zu einer zweiten Empfängereinheit unter mehreren Empfängereinheiten, die entlang eines zuvor festgelegten Pfades angeordnet sind, verzögert werden kann.

14. System nach einem oder mehreren der Ansprüche 9 bis 13, **dadurch gekennzeichnet, dass** die Audio-Meldungen in Form unkomprimierter Daten vorliegen.

15. System nach einem oder mehreren der vorangehenden Ansprüche, wobei vor dem Starten des Streamings der Multicast-Meldung zum Tonrundsenden die Multicast-Kommunikationsservereinheit (306) ein Ankündigungspaket an die Empfängereinheiten (3) sendet, das die zur Audio-Wiedergabe der Multicast-Meldung ausgewählten Empfängereinheiten (3) aktiviert, wobei das Paket die Adressen der zu aktivierenden Empfängereinheiten (3) und eine Beschreibungsdatei vom Session Description Protocol (SDP)-Typ, welche die Multicast-Gruppe und den Port angibt, der zum Streaming vorgesehen ist, und Informationen, die für die Synchronisation und zum Starten einer Sprachführungssitzung benötigt werden, enthält.

**16.** System nach einem oder mehreren der vorangehenden Ansprüche, **dadurch gekennzeichnet, dass** die Verbindungsvermittlung mindestens zwei Nebenstellenanlagen umfasst, d. h. eine in Betrieb und die andere in Bereitschaft mit einer Backup-Funktion, d. h. einem sogenannten Hot Backup, wobei ein Mittel zum Detektieren des Betriebszustands der betriebsbereiten Nebenstellenanlage und/oder des Betriebszustands des Netzwerks und ein Mittel zum automatischen Umschalten der Verbindung der Sende/Empfangs-Client-Einheiten, der Empfängereinheiten zum Rundsenden von Multicast-Meldungen und der Multicast-Kommunikationsservereinheit zum Verbinden der Sende/Empfangs-Client-Einheiten und der Empfängereinheiten mit einer Multicast-Kommunikationsservereinheit von der einen oder der anderen Nebenstellenanlage aus bereitgestellt sind, während die eine oder die mehreren Nebenstellenanlagen ein Mittel zum Detektieren und Speichern des Kommunikationszustands zwischen den verschiedenen Einheiten wie zum Beispiel den Sende/Empfangs-Client-Einheiten und/oder den Empfängereinheiten und/oder anderen Nutzern und ein Mittel zum Wiederherstellen der Kommunikation, die beim Umschalten von Verbindungen unterbrochen und durch das Detektions- und Speichermittel aufgezeichnet wurde, aufweisen.

**17.** System nach einem oder mehreren der vorangehenden Ansprüche, **dadurch gekennzeichnet, dass** es ein Mittel zum regelmäßigen Abfragen der Netzwerkschnittstelle der arbeitenden Nebenstellenanlage aufweist und ein Mittel zum Anzeigen des Ergebnisses des regelmäßigen Abfragevorgangs für die zweite Bereitschafts-Nebenstellenanlage aufweist, die betrieben wird, und das Mittel zum Umschalten der Verbindung von Sende/Empfangs-Client-Einheiten und/oder der Empfängereinheiten und/oder anderer Nutzer und das Mittel zum Wiederherstellen der Kommunikation, die beim Umschalten von Verbindungen unterbrochen wurde, betreibt, wenn das Ergebnis des regelmäßigen Abfragevorgangs anzeigt, dass die Netzwerkschnittstelle der ersten Nebenstellenanlage nicht im Betriebszustand ist.

**18.** System nach einem oder mehreren der vorangehenden Ansprüche, **dadurch gekennzeichnet, dass** es ein Telefonkommunikationssystem für eine Kommunikation zwischen mehreren Notruftelefonen und mindestens einer Telefonbetreiberstation ist, insbesondere in Eisenbahntunneln, wobei eine Telefonbetreiberstation bereitgestellt ist, die aus einer Sende/Empfangs-Client-Einheit an mindestens einem der Eingänge des Tunnels und mehreren Notruftelefonen besteht, die entlang des gesamten Bahngleises innerhalb des Tunnels und in zuvor festgelegten Abständen angeordnet sind und jeweils aus einer einzelnen Empfängereinheit mit mindestens einem einzelnen Lautsprecher zum Rundsenden einer Audio-Meldung bestehen, wobei eine Verbindungsvermittlung an einem der Eingänge bereitgestellt ist.

## Revendications

**1.** Système de communication pour la diffusion de messages audio en multidiffusion, ou multicast, comprenant :

un réseau de communication audio Voice over IP (VoIP), ledit réseau comprenant :

au moins une unité client émetteur-récepteur (7) et une ou plusieurs unités réceptrices (3) pour recevoir un message audio multicast envoyé par l'au moins une unité client émetteur-récepteur (7), chacune desdites unités réceptrices possédant des moyens (303) pour la diffusion du message audio ;
un réseau Ethernet (5) pour la connexion de ladite au moins une unité client émetteur-récepteur (7) et une ou plusieurs unités réceptrices (3) ;
au moins un central téléphonique (206) pour la connexion des une ou plusieurs unités clients émetteurs-récepteurs (7) et de l'unité réceptrice (3) par l'intermédiaire d'un réseau Ethernet, chaque unité client émetteur - récepteur (7) et chaque unité réceptrice (3) étant identifiée de façon unique par une adresse IP ;

**caractérisé en ce que** le central téléphonique comprend un PABX (206) une unité serveur de communication en multicast (306) est connectée aux central téléphonique PABX (206) pour se connecter aux unités clients émetteurs-récepteurs (7) et aux unités réceptrices (3), ladite unité serveur de communication en multicast (306) comprenant un streamer multicast, un terminal récepteur-émetteur connecté au PABX pour communiquer avec l'unité clients émetteur - récepteur (7) et aux une ou plusieurs unités réceptrices (3) pour transmettre aux moyens (303) pour la diffusion du message multicast de chacune desdites unités réceptrices (3) en multicast ;
l'unité serveur de communication en multicast (306) reçoit de l'unité client émetteur - récepteur (7) une commande contenant les informations nécessaires à initier la session multicast comprenant les adresses destinataires des unités réceptrices (3) et crée un message d'annonce session à envoyer sur le réseau (5), permettant aux unités réceptrices (3) de recevoir et diffuser un flux de messages multicast crée par le streamer de messages multicast.

2. Système de communication selon la revendication 1, **caractérisé en ce que** le terminal récepteur - émetteur du serveur de communication en multicast est constitué d'un softphone opérant avec le protocole SIP et ayant son propre nombre ID et nom d'utilisateur.

3. Système selon la revendication 1 ou 2, **caractérisé en ce que** l'unité client émetteur - récepteur est une console téléphonique opérant avec le protocole SIP.

4. Système selon la revendication 3, **caractérisé en ce que** l'unité client émetteur - récepteur est une console téléphonique opérant avec le protocole SIP, capable de transmettre des chaînes de caractères alphanumériques ou du texte.

5. Système selon l'une ou plusieurs des revendications précédentes, **caractérisée en ce que** les unités réceptrices sont des unités téléphoniques réceptrices - émettrices, qui sont paramétrées en réponse automatique et peuvent être activées pour la transmission par des touches d'activation électroniques ou mécaniques, logicielles ou matérielles.

6. Système selon l'une ou plusieurs des revendications précédentes, **caractérisé en ce que** le serveur de communication en multicast transmet un message de début de transmission sur le réseau, ledit message contenant des informations sur les adresses et/ou les codes ID des unités réceptrices destinées à recevoir le message, ledit message étant lu par chaque unité réceptrice, les unités réceptrices mentionnées dans le message de début de session étant ainsi activées, lesdites unités réceptrices transmettant un message d'activation de réception à l'unité serveur de communication en multicast.

7. Système selon l'une ou plusieurs des revendications précédentes, **caractérisé en ce que** l'unité de communication en multicast possède une mémoire de stockage d'une pluralité de messages acoustiques et/ou visuels, lesdits messages étant identifiés de façon unique par un code ID et étant rappelés et transmis par ladite unité de communication en multicast lorsque celle-ci reçoit d'une unité client émetteur - récepteur une commande d'émission contenant le code ID d'un ou plusieurs desdits messages acoustiques ou visuels.

8. Système selon l'une ou plusieurs des revendications précédentes, **caractérisé en ce que** l'unité serveur de communication en multicast possède un générateur de messages audio à partir de messages texte, lesdits messages textes étant transmis à l'unité serveur de communication en multicast d'une unité client émetteur - récepteur.

9. Système selon l'une ou plusieurs des revendications précédentes, **caractérisé en ce qu'**il comporte des moyens pour synchroniser l'instant de début de la diffusion des messages audio par les unités réceptrices individuelles.

10. Système selon la revendication 9, **caractérisée en ce que** l'instant de début de la diffusion des messages audio par les unités réceptrices individuelles est telle que, dans une position d'écoute prédéterminée, par rapport à la position d'au moins deux unités réceptrice, les contributions acoustiques desdits messages diffusées par les dites au moins deux unités fonctionnelles sont combinés sans détériorer la qualité du message audio émis.

11. Système selon la revendication 9, **caractérisé en ce qu'**il comporte la possibilité de varier en retard sur l'instant de diffusion pour chaque unité réceptrice, de façon que la diffusion du message acoustique commence au même instant pour chacune desdites unités réceptrices.

12. Système selon l'une ou plusieurs des revendications précédentes, **caractérisé en ce que** deux unités réceptrices adjacentes sont placées à une distance l'une de l'autre qu'avec un instant identique de début de la diffusion du message acoustique pour lesdites deux unités, le rapport d'intensité entre le signal émis par une unité et le signal émis par les autres unités réceptrices est inférieur à 10 dB et/ou le retard entre les deux messages dans une première position d'écoute intermédiaire prédéterminée entre les deux unités réceptrices est inférieur à 60 ms, notamment à 45 ms.

13. Système selon la revendication 9, **caractérisée en ce que** les moyens pour synchroniser l'instant de début de la diffusion des messages audio par les unités réceptrices différents, peut être réglé de façon que les instants de début de la diffusion des messages audio soient différés l'un de l'autre dans une direction de trajectoire avec une vitesse prédéterminée d'une première à une deuxième unité réceptrice d'une pluralité d'unités réceptrices agencées le long d'une trajectoire prédéterminée.

**14.** Système selon l'une des revendications 9 à 13, **caractérisé en ce que** les messages audios sont en forme de données non-comprimées.

**15.** Système selon l'une ou plusieurs des revendications précédentes, dans lequel, avant de commencer le streaming du message multicast pour la diffusion sonore, l'unité serveur de communication en multicast (306) envoie un paquet d'annonce aux unités réceptrices (3) activant les unités réceptrices (3) sélectionnées pour la reproduction audio dudit message multicast, le paquet contenant les adresses des unités réceptrices (3) activées, et un fichier descriptif du type de Session Description Protocol, SDP, indiquant le groupe multicast et le port destiné au streaming, aussi bien que les informations nécessaires à la synchronisation et au début d'une session de guidage vocal.

**16.** Système selon l'une ou plusieurs des revendications précédentes, **caractérisé en ce que** le central téléphonique de connexion comprend au moins deux PBXs, l'un en fonction et l'autre en alerte avec une fonction de sauvegarde, c'est-à-dire de sauvegarde à chaud, des moyens étant prévus pour détecter la condition de fonctionnement du PBX en fonction et/ou la condition de fonctionnement du réseau, et des moyens étant prévus pour commuter automatiquement la connexion des unités clients émetteurs - récepteurs, des unités réceptrices pour la diffusion de messages multicast et de l'unité serveur de communication en multicast, pour connecter les unités clients émetteurs - récepteurs et les unités réceptrices à une unité serveur de communication en multicast de l'un ou l'autre des PBXs, alors que le/les PBX/s possèdent des moyens de détection et de stockage de la condition de communication entre les différentes unités, telles que les unités clients émetteurs - récepteurs est/les unités réceptrices et/d'autres utilisateurs, et des moyens de récupération de la communication interrompue au moment de la commutation des connexions et enregistrée par lesdits moyens de détection et de stockage.

**17.** Système selon l'une ou plusieurs des revendications précédentes, **caractérisé en ce qu'**il comporte des moyens d'interrogation de l'interface de réseau du PBX en fonction, et des moyens pour indiquer le résultat de la procédure d'interrogation au second PBX en alerte, qui est actionné et actionne les moyens de commutation de la connexion des unités clients émetteurs - récepteurs et/ou des unités réceptrices et/ou d'autres utilisateurs, et les moyens de récupération de la communication interrompue au moment de la commutation des connexions, lorsque le résultat de la procédure d'interrogation indique que l'interface de réseau du premier PBX n'est pas en fonction.

**18.** Système selon l'une ou plusieurs des revendications précédentes, **caractérisé en ce qu'**il comporte un système de communication téléphonique pour la communication entre une pluralité de téléphones d'urgence, et au moins une station opérateur téléphonique, notamment dans des tunnels ferroviaires, une station opérateur téléphonique étant prévue, qui est composée d'une unité client émetteur - récepteur au moins à l'une des entrées du tunnel et une pluralité de téléphones d'urgence étant agencés tout au long de la ligne ferroviaire à l'intérieur du tunnel, à des distances prédéterminées les uns des autres, et consistant chacun d'une unité réceptrice avec au moins un haut-parleur pour la diffusion d'un message audio, un central téléphonique de connexion étant prévu à l'une des entrées.

2
1
3
7
7
5
6
206'
206
306
306'
6'
2
1
3
7
7
5
6
206'
206
306
306'
6'
8

Fig. 1

1. Call to PA Server
Transmission of information about the HP session to A, B and C and No. Message (optional)
206
P.O.
7
5
PBX
2. Invitation to subscribe to the Multicast address224.0.1.1
PA Server
Session Announcement Broadcast Message
Message 1
Message 2
;Message 3
Message 4
306
H.P. A
H.P.
H.P. B
H.P. C
H.P.
H.P.
3.
Subscription by HPs A, B and C
3
4.
Voice transmission or opening of file "Message no."
P.O.
7
206
5
5.
Generation of Multicast streaming
PBX
PA Server
Multicast Streaming 224.0.1.1
Message 1
Message 2
Message 3
Message 4
306
H.P. A
H.P.
H.P. B
H.P. C
H.P.
H.P.
3

Fig. 2

206
3. Invitation to subscribe the multicast
address 224.0.1.1
5
Session Announcement Broadcast Message
PA
Server
PBX
306
H.P.
A
H.P.
H.P.
B
H.P.
C
H.P.
H.P.
7
3
1.
Call from HP C to the P.O.
Voice communication of recipient HPs A, B and C
P.O.
2. Consent
Call transferred to the PA Server
Transmission of session information: recipient HPs A, B and C

206
5.
Generation of
Multicast stream
5
Multicast Streaming 224.0.1.1
PA
Server
PBX
306
H.P.
A
H.P.
H.P.
B
H.P.
C
H.P.
H.P.
3
4.
Voice Transmission

Fig. 3

ET & SB server
6
Network server
106
PBX IP
206
PA Server
306
PC diagnostics
(SNMP Management St.)
406

Fig. 4

3
Help Point
HP manager &
Web application
103
VoIP telephone
203
PA service
303
Diagnostics
(SNMP Agent)
403

Fig. 5

Operator station
7
P.O. manager &
MMI Application
107
VoIP telephone
207
Diagnostics
(SNMP Agent)
307

Fig. 6

7
106
6
107
7
Operator Station A
P.O. manager &
MMI Application
107
ET & SB Server
Network Server
IP PBX
206
Operator Station B
P.O manager &
MMI Application
VoIP Telephone
(NPB)
207
P.O. Manager
Operation Request
IP PBX
Operation stopped
P.O. Manager
Disabling of calls to the
tunnel and sound broadcast

Fig. 7

3
203
6
206
7
Help Point
VoIP Telephone
ET & SB Server
Entrance
IP PBX
Operator Station A
(operating)
VoIP Telephone
(NPA)
207
VoIP Telephone
Call to NPO
[SIP]
IP PBX
Redirected to NPA
Call to NPA
[SIP]
VoIP Telephone
Manual Answer
Communication
[RTP]
Communication
[RTP]
Hangup
[SIP]
Hangup
[SIP]

Fig. 8

7
107
6
3
Operator Station A
(operating)
P.O. manager &
MMI Application
VoIP Telephone
ET & SB Server
Entrance
206
IP PBX
Help Point
Niche x
203
VoIP Telephone
(NHPx)
207
P.O. Manager
Selection of the niche x
VoIP Telephone
Call to NHPx
[SIP]
IP PBX
Call to NHPx
[SIP]
VoIP Telephone
Automatic answer
Communication
[RTP]
Communication
[RTP]
Hangup
[SIP]
Call Closed
[SIP]
Fig. 9
7
107
6
206
3
Operator Station A
(operating)
P.O. Manager &
MMI Application
VoIP Telephone
ET & SB Server
Entrance
IP PBX
PA Server
Help Point
Niche x
303
PA service
(IHPx)
207
306
P.O. Manager
Selection of the niche x
Telephone VoIP
Call to
PA Server [SIP]
IP PBX
Communication of number
NHPx [TCP]
PA Server
Description of session
[EmPAP]
PA service
Checking recipient adresses
Joining the session multicast
address (Is:Ps)
Message
[RTP
Stream audio
[Multicast to Is:Ps]
Start of transmission (possible
programmed delay)
Hangup
[SIP]
Session closed

Fig. 10

7
207
6
106
206
3
Operator Station A
(operating)
107
P.O. manager &
MMI Application
VoIP Telephone
ET & SB server
Entrance
Network Server
IP PBX
PA Server
Help Point
Niche x
303
PA service
(IHPx)
306
P.O. Manager
Selection of the niche x
VoIP Telephone
Call to
PA Server [SIP]
IP PBX
Communication of number
NHPx [TCP]
PA Server
Available messages
displayed [NTFS]
Network Server
Message name
[TCP]
PA Server
Session description
[EmPAP]
PA Service
Cheching recipient addresses
Joining the session multicast
address (Is:Ps)
Stream audio
[Multicast to Is:Ps]
Start of transmission (possible
programmed delay)
Session closed


Fig. 11

3
3
306
6
206
7
107
Help Point
Niche y
PA service
(IHPy)
303
Help Point
Niche x
VoIP Telephone
203
ET & SB Server
Entrance
IP PBX
PA Server
Operator station
(operating)
P.O. manager &
MMI Application
VoIP Telephone
207
VoIP Telephone
Call to NPO
[SIP]
IP PBX
Redirecting to NPA
Call to NPA
[SIP]
VoIP Telephone
Manual answer
Communication
[RTP]
Commun. of numb.
NHPy
PA Server
Call Transfer
[SIP]
Session description
[EmPAP]
Cheching recipient addresses
Joining the session multicast
address (Is:Ps)
VoIP Telephone
Message
[RTP]
Audio Stream
[Multicast to Is:Ps]
Start of transmission (possible
programmed delay)
Session closed
[EmPAP]

Fig. 12

3
203
306
6
206
3
103
Help Point
Niche x
ET & SB Server
Entrance
Help Point
Niche y
303
303
VoIP Telephone
Call to
PA Server [SIP]
IP PBX
PA Server
Session description
[EmPAP]
PA service
Checking recipient addresses
Joining session multicast
address (Is:Ps)
Message
[RTP]
Audio Stream
[Multicast to Is:Ps]
Start of transmission
Hangup
[SIP]
Session closed
[EmPAP]

Fig. 13

106
6
206
103
3
107
7
106
6
206
Master Server
Network Server
IP PBX
Help Point
(Niche x)
HP Manager &
Web application
VoIP Telephone
(NHPx)
Operator Station A
(operating)
P.O. Manager &
MMI Application
VoIP Telephone
(NPA)
Backup Server
Network Server
IP PBX
203
207
Network server
Polling on the local PBX
Network Server
Polling on the remote PBX
IP PBX
Redirecting to NPA
Call to NPO
[SIP]
VoIP Telephone
Call to NPA
[SIP]
VoIP Telephone
Storing current call
Manual Answer
Communication
[RTP]
Network Server
Closing network interface
Activating virtual interface
and PBX
Hangup
[Broadcast]
HP Manager
Closing pending SIP
channel
P.O.Manager
Closing pending SIP
channel
VoIP Telephone
Automatic call
[SIP]
IP PBX
Automatic answer
VoIP Telephone
Automatic call
[SIP]
Manual answer
Communication
[RTP]


Fig. 14

IP PBX
SIP
Registering
3061
206
Waiting
206
IP PBX
Dial
Receiving call
3062
206
IP PBX
Answer
Automatic answer
3063
VoIP TELEPHONE
PAcmd
Reception and analysis
3064
3, 7
1,3
Start of session
EmPAP
Tunnel
3065
3066
Prerecorded message?
Yes
no
3, 7
3067
VoIP TELEPHONE
RTP
Forwarding
Opening file
3069
1, 3
Stream
Multicast
Tunnel
30610
3, 7
VoIP TELEPHONE
Hangup
Session closed
Galleria
30611
1, 3

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1903715 A